# EUROPÄISCHE PATENTSCHRIFT

(11) **EP 1 020 118 B1**
(45) Veröffentlichungstag und Bekanntmachung des Hinweises auf die Patenterteilung: **08.01.2003**
(21) Anmeldenummer: 00104089.8
(22) Anmeldetag: 24.10.1994
(51) Int. Cl.: A23B 4/16, A23B 4/00

(54) **Verfahren zur Behandlung von Frischfleisch**
Meat treatment process
Procédé de traitement de viande

(30) Priorität: 22.10.1993 DE 4336138
(43) Veröffentlichungstag der Anmeldung: 19.07.2000
(62) Teilanmeldung aus: 94930973.6
(73) Patentinhaber: Vivotec New Concepts in Fresh Meat GmbH, 47652 Weeze (DE)
(72) Erfinder: Verhaag, Hubert, 47623 Kevelaer (DE); Schwörer, Wilfried, 67390 Artolsheim (FR); Schlegel, Jürgen, 7801 Umkirch (DE)
(74) Vertreter: Manitz, Finsterwald & Partner

(56) Entgegenhaltungen:
- WO-A-92/10939
- WO-A-93/19629
- DE-A- 4 041 070
- DE-A- 4 230 285
- US-A- 2 402 199
- US-A- 4 791 705

## Beschreibung

Die vorliegende Erfindung betrifft ein Verfahren zur Behandlung von Frischfleisch gemäß dem Oberbegriff des Anspruchs 1.

Ein Verfahren dieser Art ist aus der WO-A-9210939 bekannt. Bei dem in dieser Druckschrift beschriebenen Verfahren wird während der Zwischenlagerzeit wiederholt eine Sauerstoffatmosphäre mit erhöhtem Druck auf- und wieder abgebaut, wobei die Zwischenlagerzeit zwischen mehreren Tagen und mehreren Wochen betragen kann. Der maximale Druck, der nach einer jeweiligen Erhöhung zyklisch aufgebaut wird, beträgt dabei zwischen 1,5 bis 2 bar über dem Atmosphärendruck.

Aus der DE/EP 0 274 334 T1 ist ein Verfahren zur Behandlung von Fleisch bekannt, das dazu dient, das Fleisch mürbe zu machen und/oder seine Haltbarkeit und sein Aussehen bei der Konservierung zu verbessern. Dazu wird das Fleisch in einen geschlossenen Behälter gelegt, in dem ein Vakuum erzeugt wird. Anschließend wird in diesen Behälter ein komprimiertes, vorzugsweise steriles Gas eingebracht, um im Behälter einen Druck zu erzeugen, der höher ist als der Atmosphärendruck. Der Behälter soll dabei während der Niederdruck-/Hochdruckzyklen vorzugsweise nach Art eines Butterfasses um sich selbst rotieren. Dieses Behandlungsverfahren ist dazu bestimmt, während der Auftauphase von Gefrierfleisch, jedoch auch vor dem Einfrieren des Fleisches sowie nach dem Gefrieren des Fleisches angewendet zu werden.

Aufgabe der vorliegenden Erfindung ist es, das eingangs angegebene Verfahren in der Weise auszubilden, daß die Zartheit des Frischfleisches im Verlauf eines Reifevorganges wesentlich erhöht, der Geschmack verbessert, die Gesamtkeimzahl entscheidend verringert und damit die Haltbarkeit wesentlich erhöht wird, und daß ein dauerhafter Frischezustand erreicht wird, der sich in einer intensiv roten Fleischfarbe äußert, die im freien Zustand des Fleisches mehrere Tage und unter Vakuum mehrere Wochen beibehalten wird.

Gelöst wird diese Aufgabe nach der Erfindung ausgehend von einem Verfahren der eingangs genannten Art durch die kennzeichnenden Merkmale 'des Anspruchs 1.

Dabei soll die in dem Raum geschaffene Sauerstoffatmosphäre vorteilhafterweise einen Reinheitsgrad von wenigstens 50 %, insbesondere mehr als 80 % und vorzugsweise von mindestens 93 % besitzen.

Durch die gemäß der Erfindung geschaffene hohe Sauerstoffkonzentration wird erreicht, daß sich ein äußerst ausgeprägter Reifungs- und Konservierungseffekt ergibt. Dies steht im Zusammenhang mit einer Bindung und Abführung von Kohlendioxid und Stickstoff in einer durch Diffusion aus der Sauerstoffreinatmosphäre in das Frischfleisch bewirkten deutlichen Erhöhung der Sauerstoffkonzentration im Fleisch.

Es hat sich gezeigt, daß es von Vorteil ist, den einmal in dem abgeschlossenen Raum aufgebauten Druck während der gesamten weiteren Zwischenlagerzeit zu halten. Der dauerhafte hohe Druck hat dabei offensichtlich zur Folge, daß die im Fleisch vorhandene Faserverkrampfung gelöst wird, die Fasern relativ zueinander beweglicher werden und damit das Fleisch für den angestrebten Sauerstoffeintritt zugänglicher wird. Als Folge davon ist es möglich, die Sauerstoffbeladung des Fleisches zu steigern, was praktisch eine Folge des sich einstellenden, mit einem Schwammeffekt vergleichbaren Saugeffektes ist.

Nach der Zwischenlagerzeit in der speziell geschaffenen Sauerstoffatmosphäre, die für Schweinefleisch typischerweise etwa 3 Tage und für Rindfleisch etwa eine Woche dauern kann, wird ein Frischfleisch mit einem pH-Wert erhalten, der häufig sogar etwas höher als im Beschickungszustand ist. Da der pH-Wert ein Kriterium für den Qualitätszustand des Fleisches ist, wird auch anhand dieses Kennwertes deutlich, daß mit dem erfindungsgemäßen Verfahren unerwartete Frischewerte erzielt werden können, die sich bei Fleisch in einer ausgeprägt intensiv roten Farbe äuβern, die in wiederum für die Erfindung typischer Weise lange beibehalten wird.

Ein weiterer wesentlicher Vorteil des Verfahrens nach der Erfindung ist, daß der auftretende Saftverlust während des Reifens sehr gering und beispielsweise bei Rindfleisch nur etwa 1 % und bei Schweinefleisch nur etwa 2 % beträgt. Diese angegebenen Werte stellen natürlich nur Beispiele dar und sind in keiner Weise einschränkend zu verstehen.

Das überraschende Reifungsergebnis gestattet auch den Transport großer Fleischstücke ohne Verwendung von Vakuumhüllen, ohne daß sich die sonst übliche Dunkelverfärbung des Frischfleisches einstellt. Eine Haltbarkeit des Fleisches von einer Woche nach der Zwischenlagerzeit ist ohne zusätzliche Maßnahmen ohne weiteres möglich.

Dieses Verhalten des nach dem Verfahren gemäß der Erfindung gereiften Frischfleisches ermöglicht es auch, Frischfleisch in wiederverwendbaren Behältnissen, insbesondere Glasbehältnissen einzuschließen und auf diese Weise die heute üblichen Kunststoffolienverpackungen zu vermeiden und somit zu einer Verringerung der Umweltbelastung beizutragen. In dem verschließbaren Behältnis kann eine Sauerstoffatmosphäre, gegebenenfalls unter geringem Überdruck, geschaffen werden.

Vorteilhaft ist auch, daß aufgrund der nach der Sauerstoffbehandlung vorhandenen hohen Sauerstoffkonzentration im Fleisch kein oder nur ein unwesentlicher Anteil an Sauerstoff aus der Umgebungsatmosphäre auf das Fleisch einwirken muß, um den Frischezustand lange aufrechtzuerhalten. Große, eine entsprechende Sauerstoffmenge fassende Behältnisse sind deshalb für die Aufbewahrung und den Transport des Fleisches nicht erforderlich.

Eine weitere Ausführungsform des erfindungsgemäßen Verfahrens ist dadurch gekennzeichnet, daß während der Zwischenlagerzeit eine kontinuierliche oder diskontinuierliche Ergänzung der Sauerstoffatmosphäre in dem geschlossenen Raum vorgenommen wird, wobei vorzugsweise in den geschlossenen Raum kontinuierlich Sauerstoff mit einem Druck eingeleitet wird, der höher als ein vorgebbarer Ablaßdruck ist, so daß sich aufgrund der Druckdifferenz eine kontinuierliche Durchströmung einstellt. Durch diese vorzugsweise kontinuierliche Ergänzung von Sauerstoff in dem abgeschlossenen Raum kann der ursprüngliche Sauerstoffgehalt in dem Raum während der gesamten Zwischenlagerzeit aufrechterhalten werden, so daß sich ein besonders guter Reifungs- und Konservierungseffekt einstellt.

Je nach Art des Frischfleisches sind unterschiedliche Ausführungsformen der Erfindung besonders vorteilhaft. So werden bei Rind-, Kalb-, Lamm-, Wild-, Geflügelfleisch und Fisch besonders gute Resultate erzielt, wenn der geschlossene Raum während der Zwischenlagerzeit auf einer Kühlraumtemperatur gehalten und der Sauerstoff dem geschlossenen Raum mit einer Temperatur von -3° C bis +3° C, insbesondere 0°C zugeführt wird. Bei Rohwurst und Schinken, die bzw. der auch unter den Sammelbegriff "Frischfleisch" fallen soll, kann es dagegen vorteilhaft sein, die Temperatur innerhalb des geschlossenen Raums während der Zwischenlagerzeit auf einer höheren Temperatur, beispielsweise +20° C zu halten.

Weitere vorteilhafte Ausgestaltungen des erfindungsgemäßen Verfahrens sind aus den Unteransprüchen ersichtlich.

Zur Durchführung des erfindungsgemäßen Verfahrens wird beispielsweise eine Vorrichtung verwendet, die ein Gehäuse mit einem Gehäusekörper aufweist, in dem eine luftdicht verschließbare Öffnung zum Einbringen/Herausnehmen des Frischfleisches, eine an zumindest eine Sauerstoffquelle anschließbare, insbesondere deckenseitig mündende Einlaßöffnung und zumindest eine eine definierte Abströmung aus dem Innenraum des Gehäuses gewährleistende Abführöffnung, die vorzugsweise unterhalb der Einlaßöffnung, insbesondere am Boden oder in Bodennähe des Gehäuses angeordnet ist, vorgesehen sind, wobei zu dem Gehäuse weiterhin ein Gehäuseerweiterungselement gehört, das an einer Seitenwandung des Gehäuses und dabei vorzugsweise an der der Öffnung zum Einbringen/Herausnehmen des Frischfleisches gegenüberliegenden Seitenwandung anschließbar ist, im angeschlossenen Zustand eine Verbindungsöffnung in der Seitenwandung des Gehäusekörpers und eine in einer Seitenwandung des Gehäuseerweiterungselements vorgesehene, der Verbindungsöffnung des Gehäusekörpers zugeordnete Öffnung, aneinanderliegen, und die Verbindungsöffnung in der Seitenwandung des Gehäusekörpers durch einen Deckel verschließbar ist, wenn kein Gehäuseerweiterungselement an den Gehäusekörper angeschlossen ist.

Durch die Anordnung der Einlaß- und Abführöffnung an gegenüberliegenden Stellen des Gehäuses wird gewährleistet, daß der gesamte Innenraum weitgehend gleichmäßig mit Sauerstoff gefüllt wird. In vorteilhafter Weise kann die Kapazität der Vorrichtung erweitert werden, indem an den Gehäusekörper ein Gehäuseerweiterungselement angeschlossen wird. Dabei wird das Gehäuseerweiterungselement vorteilhafterweise an der Seitenwandung des Gehäusekörpers angebracht, die der Öffnung zum Einbringen/Herausnehmen des Frischfleisches gegenüberliegt, so daß der Innenraum der Vorrichtung geradlinig und langgestreckt verläuft.

Indem in der der Verbindungsöffnung gegenüberliegenden Seitenwandung des Gehäuseerweiterungselements eine der Verbindungsöffnung entsprechende weitere Verbindungsöffnung vorgesehen ist, kann die Anlage beliebig durch Gehäuseerweiterungselemente erweitert werden. Die weitere Verbindungsöffnung in dem letzten Gehäuseerweiterungselement wird dann durch einen Deckel verschlossen.

Da gemäß der vorliegenden Erfindung sehr hohe Drücke in dem durch das Gehäuse gebildeten abgeschlossenen Raum erzeugt werden sollen, müssen die Verbindungen zwischen dem Gehäusekörper und den Gehäuseerweiterungselementen sowie dem Deckel entsprechend ausgebildet sein. Dies geschieht in vorteilhafter Weise durch Verbindungsflansche, die entsprechend um die Verbindungsöffnungen bzw. an dem Deckel vorgesehen sind. Solche Flanschverbindungen sind aus der Hochdrucktechnik bekannt und bedürfen deshalb hier keiner weiteren Erläuterung.

In den Gehäuseerweiterungen können jeweils dieselben Einlaß- und Abführöffnungen wie in dem Gehäusekörper vorgesehen sein, um bei einer sehr großen Vorrichtung einen ausreichend schnellen Absaugvorgang und einen ausreichend schnellen Druckaufbau sowie eine gute Zirkulation des während der Zwischenlagerzeit strömenden Sauerstoffs zu gewährleisten.

Um die Gehäusetür luft- und druckdicht verschließen zu können, kann eine pneumatische Dichtung in der Form eines um die Öffnung in einem geschlossenen Umlauf herumgeführten Schlauches vorgesehen sein, dessen Durchmesser durch Zuführung eines Fluids elastisch erweiterbar ist. Die luft- und druckdichte Verschließung kann auch durch einen Bajonettverschluß erfolgen.

Zur Speicherung von Sauerstoff ist ein außerhalb des Gehäuses angeordneter Sauerstofftank vorgesehen, der über eine mittels eines Magnetventils verschließbare Abzweigleitung sowohl mit dem Sauerstofferzeuger als auch mit der Einlaßöffnung verbunden ist. Mit Hilfe dieses Sauerstofftanks ist es möglich, bereits während einer vorgeschalteten Absaugphase von einer Sauerstoffquelle zugeführten Sauerstoff mit erhöhtem Druck zu speichern, so daß nach Beendigung der Absaugphase der im Sauerstofftank gespeicherte Sauerstoff sehr schnell in den geschlossenen Raum eingeleitet werden kann.

Hierbei kann die Sauerstoffquelle ein Sauerstofferzeuger oder ein Sauerstoffspeicher sein, wobei insbesondere bei kleinen Anlagen die Verwendung einer Sauerstoffflasche vorteilhaft ist.

Im übrigen kann der Sauerstoff flüssig oder gasförmig zugeführt werden.

Vorteilhafterweise ist der Abführöffnung ein Überdruckventil zugeordnet, das bei einem vorgebbaren Druck in dem abgeschlossenen Raum des Gehäuses anspricht. Hierdurch ist es möglich, die Sauerstoffatmosphäre im geschlossenen Raum bis zum Öffnungsdruck des Überdruckventils aufzubauen und anschließend unter Beibehaltung dieses Drucks eine kontinuierliche Sauerstoffströmung aufrechtzuerhalten.

Die Erfindung wird nachfolgend anhand der Zeichnung beispielsweise näjher erläutert; in dieser zeigt:
- Fig. 1: eine schematische Seitenansicht einer Vorrichtung zur Durchführung des erfindungsgemäßen Verfahrens,
- Fig. 2: eine schematische Ansicht eines in die Vorrichtung nach Fig. 1 einfahrbaren Trägergestell,
- Fig. 3: eine schematische Darstellung zur Verdeutlichung der Funktionsweise der Vorrichtung zur Durchführung des erfindungsgemäßen Verfahrens, und
- Fig. 4: eine schematische Seitenansicht einer durch ein Gehäuseerweiterungselement erweiterten Vorrichtung.

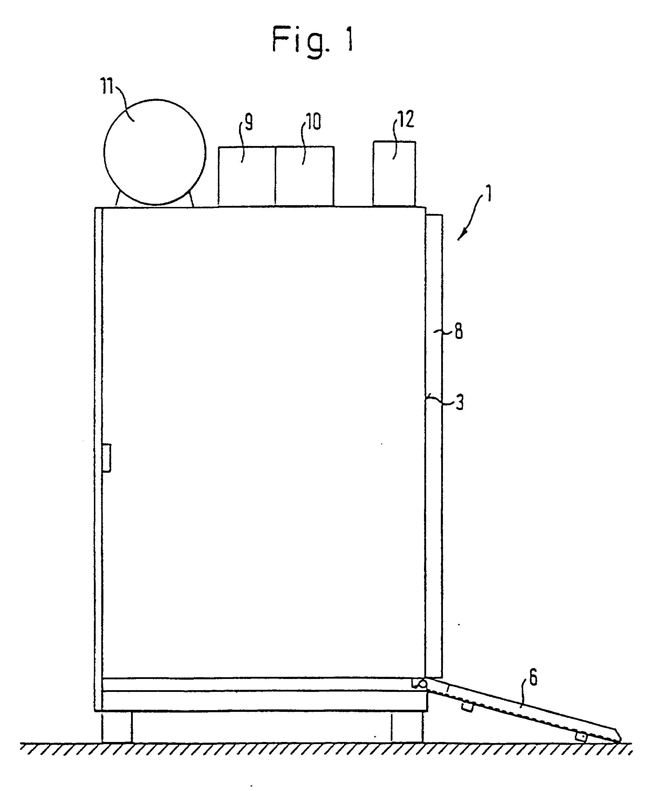

Fig. 1 zeigt eine Vorrichtung zur Durchführung des erfindungsgemäßen Verfahrens mit einem aus einer Schweißkonstruktion bestehenden, geschlossen ausgebildeten Gehäuse 1 mit einer beladeseitigen Öffnung 3, die mittels einer Gehäusetür 8 dicht verschließbar ist.

Eine vorzugsweise einhängbar ausgebildete Auffahrrampe 6 ist im Türbereich an dem Gehäuse 1 angelenkt. Diese Auffahrrampe 6 kann so ausgebildet sein, daß sie in den Innenraum des Gehäuses 1 verschwenkt und dort verstaut werden kann, so daß sie bei Bedarf jederzeit zur Verfügung steht, bei geschlossenem Gehäuse jedoch nie störend in Erscheinung tritt. Auf dem Gehäuse 1 sind außenseitig ein Sauerstofferzeuger 9, eine Evakuierungspumpe 10 sowie ein Sauerstofftank 11 und eine elektronische Steuereinheit 12 angebracht.

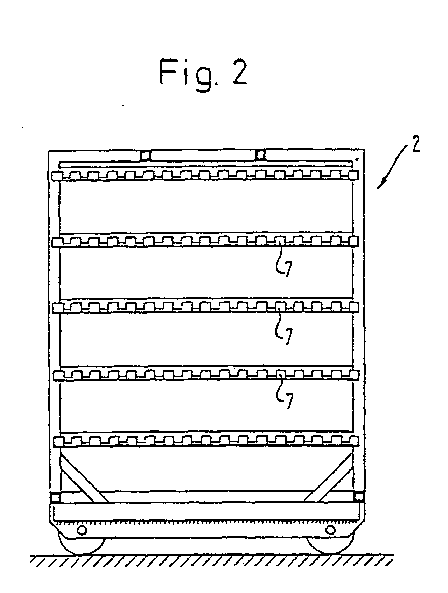

Fig. 2 zeigt ein aus einer Schweißkonstruktion bestehendes Trägergestell 2 mit einer Mehrzahl von Hängeeinrichtungen 7 für das Frischfleisch.

Durch Aufhängen oder kleinflächige Abstützung des Frischfleisches ist gewährleistet, daß das Frischfleisch allseitig für den im Innenraum des Gehäuses 1 vorhandenen Reinstsauerstoff zugänglich ist und demgemäß der Sauerstoff unbehindert in das gesamte Fleischvolumen eindiffundieren kann.

Das Trägergestell 2 ist fahrbar ausgebildet und wird im beladenen Zustand über die Auffahrrampe 6 in den Innenraum des Gehäuses 1 eingefahren. Nach dem Hochschwenken der Auffahrrampe 6 kann die Türe 8 des Gehäuses 1 geschlossen und mit dem Sauerstoffbehandlungsverfahren begonnen werden.

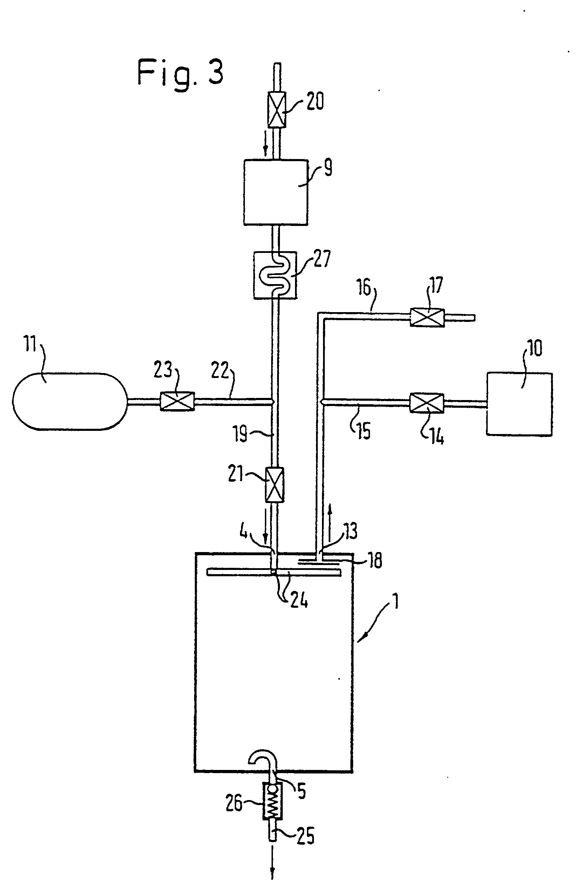

Das Gehäuse 1 weist ferner, wie Fig. 3 in schematischer Weise zeigt, dekkenseitig eine Evakuierungsöffnung 13 und eine Sauerstoff-Einlaßöffnung 4 sowie bodenseitig eine Sauerstoff-Abführöffnung 5 auf.

Die Evakuierungspumpe 10 ist über eine mittels eines Magnetventils 14 verschließbare Rohrleitung oder einen Schlauch 15 mit der Evakuierungsöffnung 13 verbunden.

Von der Rohrleitung 15 zweigt zwischen dem Magnetventil 14 und der Evakuierungsöffnung 13 eine Rohrleitung oder ein Schlauch 16 ab, der ebenfalls mittels eines Magnetventils 17 verschließbar ist und in die Umgebungsatmosphäre mündet.

Am innerhalb des Gehäuses 1 liegenden Ende der Rohrleitung 15 sind zwei parallele, horizontale, plattenförmige Elemente 18 vorgesehen, wobei das untere plattenförmige Element das offene Ende der Rohrleitung 15 überdeckt. Auf diese Weise entsteht ein ringförmiger Spalt zwischen den beiden plattenförmigen Elementen 18, der ein großflächiges Absaugen der Luft bzw. des Sauerstoffs aus dem Gehäuse 1 und einen gleichmäßigen Evakuierungseffekt fördert.

Der Sauerstofferzeuger 9 ist über eine Rohrleitung oder einen Schlauch 19 mit der Einlaßöffnung 4 verbunden, wobei das Ansaugende der Rohrleitung 15 mittels eines Magnetventils 20 verschließbar ist.

Zwischen dem Sauerstofferzeuger 9 und der Einlaßöffnung 4 ist weiterhin ein Wärmetauscher 27 in Form eines Peltier-Elementes vorgesehen. Hier wird die Temperatur des Sauerstoffs gemessen und der Sauerstoff auf circa 0°C abgekühlt. Die Kühlung des Sauerstoffs trägt bedeutend zur Frische des Fleisches bei.

Zwischen dem Sauerstofferzeuger 9 bzw. dem Wärmetauscher 27 und der Einlaßöffnung 4 ist weiterhin ein Magnetventil 21 vorgesehen.

Von der Rohrleitung 19 zweigt zwischen dem Magnetventil 21 und dem Wärmetauscher 27 eine weitere Rohrleitung oder ein Schlauch 22 ab, welcher durch ein Magnetventil 23 verschließbar ist und zum Sauerstofftank 11 führt.

Die Rohrleitung 19 endet innerhalb des Gehäuses 1 in einer Sauerstoffverteilungsvorrichtung, die aus sternförmig angeordneten, d. h. vom Ende der Rohrleitung 19 sternförmig nach außen gerichteten Rohrelementen 24 'besteht. Diese Rohrelemente 24 dienen zur gleichmäßigen Verteilung des zugeführten Sauerstoffs über den gesamten Innenraum des Gehäuses 1.

Die Abführung des Sauerstoffs aus dem Innenraum des Gehäuses 1 erfolgt ab einem bestimmten, vorgebbaren Druck über eine Rohrleitung oder einen Schlauch 25, der unterhalb dieses vorgebbaren Drucks von einem Überdruckventil 26 verschlossen wird. Das innerhalb des Gehäuses 1 angeordnete Ende der Rohrleitung 25 ist bogenförmig zum Boden des Gehäuses 1 hin zurückgeführt, um das Eindringen von Wasser oder Schmutz zu verhindern.

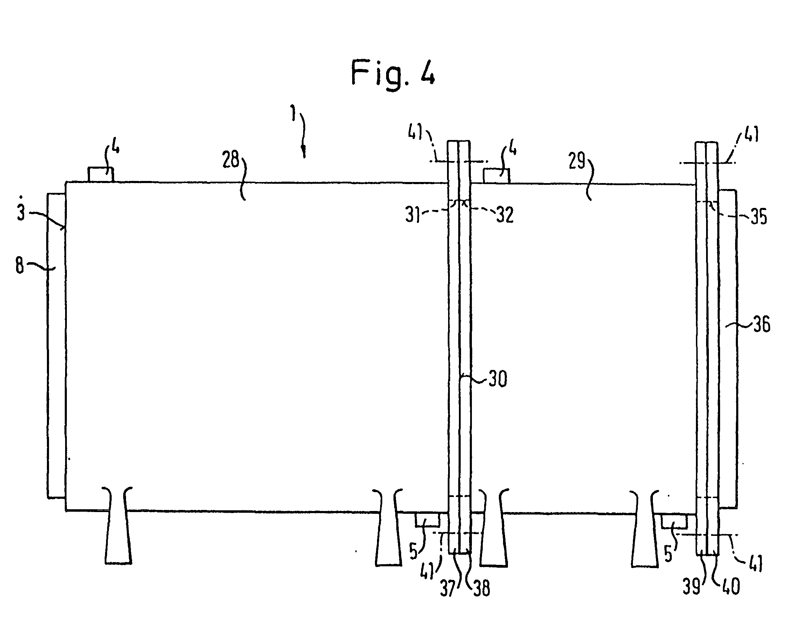

In Fig. 4 ist das Gehäuse 1 segmentartig ausgebildet und besteht aus einem Gehäusekörper 28 sowie einem Gehäuseerweiterungselement 29. Das Gehäuseerweiterungselement 29 ist an der Seitenwandung 30 des Gehäusekörpers 28 angeordnet, die der beladeseitigen Öffnung 3 des Gehäusekörpers 28 gegenüberliegt. Dabei liegen Verbindungsöffnungen 31, 32 des Gehäusekörpers 28 und des Erweiterungselements 29, die den größten Teil der Flächen der entsprechenden Seitenwandungen einnehmen, dekkungsgleich aneinander.

Das Erweiterungselement 29 weist an seiner der Verbindungsöffnung 32 gegenüberliegenden Seitenwandung eine weitere Verbindungsöffnung 35 auf, um ein weiteres Gehäuseerweiterungselement anschließen zu können. Diese Verbindungsöffnung 35 ist vorliegend durch einen Deckel 36 luftdicht verschlossen.

Bei der dargestellten Ausführungsform sind um die Verbindungsöffnungen 31, 32, 35 des Gehäusekörpers 28 und des Gehäuseerweiterungselements 29 sowie an dem Deckel 36 Verbindungsflansche 37, 38, 39, 40 vorgesehen. In Fig. 4 ist angedeutet, daß die Verbindungsflansche 37, 38, 39, 40 an ihrem Umfang verteilt gleichmäßig Öffnungen 41 aufweisen, durch die Spannschrauben zum Verbinden der Verbindungsflansche 37, 38, 39, 40 gesteckt werden können. Zwischen den Verbindungsflanschen 37, 38, 39, 40 ist jeweils ein Dichtungsmittel vorgesehen, um in der Evakuierungsphase ein Eindringen von Luft und in der Druckphase ein Austreten von Sauerstoff zu vermeiden.

Diese Vorrichtung arbeitet bei der Durchführung des erfindungsgemäßen Verfahrens folgendermaßen:

Nach der Beschickung des Gehäuses 1 mit Frischfleisch, was beispielsweise mit dem in Fig. 2 dargestellten Trägergestell 2 erfolgt, wird die Gehäusetür 8 geschlossen und verriegelt. Die Steuereinheit 12 veranlaßt nun die Befüllung einer nicht dargestellten, pneumatischen Dichtung in der Form eines um die Öffnung 3 in einen geschlossenen Umlauf herumgeführten Schlauches mit Luft hohen Druckes, wodurch der Durchmesser des Schlauches erweitert wird, um die Türe 8 gegenüber dem Gehäusekörper 28 gas- und druckdicht abzudichten.

In diesem Anfangszustand sind die Magnetventile 14, 17, 20, 21 und 23 geschlossen.

Anschließend wird der Innenraum des Gehäuses etwa eine Stunde lang evakuiert, wobei das Magnetventil 14 über die Steuereinheit 12 geöffnet wird. Am Ende der einstündigen Evakuierungszeit ist innerhalb des Gehäuses 1 nahezu Vakuum erreicht, d. h. es herrscht ein Unterdruck von 50 bis 100 mbar.

Schon etwa zwei Stunden vor dem Beginn der Evakuierung des Gehäuses 1 beginnt die Sauerstofferzeugung über den Sauerstofferzeuger 9, wobei die Magnetventile 20 und 23 geöffnet werden, das Magnetventil 21 jedoch noch geschlossen bleibt.

Der Sauerstoff strömt somit nach einer entsprechenden Reinigung über den Wärmetauscher 20 und die Rohrleitung 22 in den Sauerstofftank 11, in dem am Ende der einstündigen Evakuierungsdauer ein Überdruck von etwa 6 bar herrscht.

Nach etwa einer Stunde wird die Evakuierung des Gehäuseinnenraums beendet und das Magnetventil 14 geschlossen. Das Magnetventil 21 wird nun geöffnet, so daß der unter Überdruck stehende Sauerstoff aus dem Sauerstofftank 11 in den Innenraum des Gehäuses 1 strömen kann. Nach etwa fünf Minuten findet zwischen dem Sauerstofftank 11 und dem Innenraum des Gehäuses 1 ein Druckausgleich statt, der etwa bei 0 bis 0,6 bar Überdruck liegt.

Nachdem die Sauerstoffatmosphäre innerhalb des Gehäuses 1 über den Vorratstank 11 relativ schnell aufgebaut worden ist, schließt das Magnetventil 23 beim Druckausgleich, so daß der Sauerstoff vom Sauerstofferzeuger 9 auf direktem Weg in den Gehäuseinnenraum geleitet wird.

Grundsätzlich kann der Aufbau der Sauerstoffatmosphäre auch ohne vorherige Evakuierung und/oder ohne den vorgeschalteten Vorratstank 11 durch direktes Zuführen des Sauerstoffs beispielsweise vom Sauerstofferzeuger 9 in den Gehäuseinnenraum. Wesentlich ist letztlich, daß die resultierende Sauerstoffatmosphäre innerhalb des Gehäuseinnenraums auf den erfindungsgemäßen Überdruck gebracht wird und dabei letztlich den angegebenen ausreichenden Reinheitsgrad besitzt.

Nach einer mehrstündigen Aufbauphase ist im Gehäuseinnenraum ein Sauerstoffdruck von etwa 10 bis 11 bar oder auch bis 20 bar erreicht, bei dem das Überdruckventil 26 öffnet. Ab diesem Zeitpunkt strömt der Sauerstoff kontinuierlich vom Bereich der Einlaßöffnung 4 zur Abführöffnung 5, so daß der Gehäuseinnenraum ständig mit frischem Sauerstoff beflutet wird. Dieser Zustand wird bis zum Ende der Zwischenlagerzeit beibehalten, die bei Schweinefleisch zwei bis fünf Tage und bei Rindfleisch fünf bis neun Tage dauern kann.

Nach der Beendigung der gewünschten Zwischenlagerzeit wird der Sauerstofferzeuger 9 ausgeschaltet und die beiden Magnetventile 20 und 21 werden geschlossen. Das Magnetventil 17 wird einige Minuten lang geöffnet, um einen Druckausgleich zwischen dem Gehäuseinnenraum und der Umgebungsatmosphäre zu erhalten.

Vor dem Öffnen der Gehäusetür 8 wird zwangsläufig die Luft aus der pneumatischen Türdichtung über ein entsprechend angesteuertes Magnetventil abgelassen, um zu vermeiden, daß beim Öffnen der Tür durch den fehlenden Gegendruck die Türdichtung beschädigt wird.

## Patentansprüche

1. Verfahren zur Behandlung von Frischfleisch, insbesondere zum Reifen und Konservieren von frischem Rind-, Schweine-, Kalb-, Lamm-, Wild-, Geflügelfleisch, Fisch, Rohwurst und Schinken, bei dem das Frischfleisch in einem luftdicht verschließbaren Raum in einer von der Außenatmosphäre verschiedenen Gasatmosphäre während einer vorgebbaren Zeit zwischengelagert wird, wobei in dem luftdicht verschließbaren Raum eine Sauerstoffatmosphäre mit einem über dem Atmosphärendruck liegenden Druck aufgebaut wird,
**dadurch gekennzeichnet,**
**daß** die Sauerstoffatmosphäre in dem abgeschlossenen Raum auf einen Überdruck gegenüber dem Atmosphärendruck von 6 bis 20 bar, insbesondere von über 11 bar gebracht wird und **daß** dieser Überdruck während der gesamten weiteren Zwischenlagerzeit gehalten wird.

2. Verfahren nach Anspruch 1,
**dadurch gekennzeichnet,**
**daß** die Sauerstoffatmosphäre einen Reinheitsgrad von wenigstens 50%, insbesondere mehr als 80% und vorzugsweise von mindestens 93% besitzt.

3. Verfahren nach einem der Ansprüche 1 oder 2,
**dadurch gekennzeichnet,**
**daß** außerhalb des geschlossenen Raums Sauerstoff erzeugt und mit Überdruck, vorzugsweise mit 6 bar Überdruck gegenüber dem Atmosphärendruck in einem Sauerstofftank gespeichert wird, und
**daß** zumindest der anfängliche Aufbau der Sauerstoffatmosphäre in dem abgeschlossenen Raum mittels des gespeicherten Sauerstoffs beschleunigt durchgeführt wird.

4. Verfahren nach Anspruch 3,
**dadurch gekennzeichnet,**
**daß** nach dem Druckausgleich zwischen dem Sauerstofftank und dem abgeschlossenen Raum die Verbindung zwischen dem Sauerstofftank und dem abgeschlossenen Raum unterbrochen und der zum weiteren Aufbau des Überdrucks dem abgeschlossenen Raum erforderliche Sauerstoff direkt von der Sauerstoffquelle zugeführt wird.

5. Verfahren nach Anspruch 4,
**dadurch gekennzeichnet,**
**daß** der Druckausgleich bei etwa 0 bis 0,6 bar stattfindet.

6. Verfahren nach Anspruch 4 oder 5,
**dadurch gekennzeichnet,**
**daß** der Sauerstoff dem abgeschlossenen Raum von der Sauerstoffquelle mit einem Druck zugeführt wird, der etwas höher als der in dem abgeschlossenen Raum zu erreichende Druck ist.

7. Verfahren nach einem der Ansprüche 1 bis 4,
**dadurch gekennzeichnet,**
**daß** während der Zwischenlagerzeit eine kontinuierliche oder diskontinuierliche Ergänzung der Sauerstoffatmosphäre in dem geschlossenen Raum vorgenommen wird, wobei vorzugsweise in den geschlossenen Raum kontinuierlich Sauerstoff mit einem Druck eingeleitet wird, der höher ist als ein vorgebbarer Ablaßdruck, so **daß** sich aufgrund der Druckdifferenz eine kontinuierliche Durchströmung einstellt.

8. Verfahren nach einem der Ansprüche 1 bis 7,
**dadurch gekennzeichnet,**
**daß** als Zwischenlagerzeit bei Schweinefleisch 2 bis 5 Tage und bei Rindfleisch 5 bis 9 Tage gewählt wird.

9. Verfahren nach einem der Ansprüche 1 bis 8,
**dadurch gekennzeichnet,**
**daß** das Frischfleisch in gut gekühltem Zustand, insbesondere mit einer Temperatur im Bereich von 1°C bis 3°C, in den geschlossenen bzw. verschließbaren Raum eingebracht wird, wobei vorzugsweise das den geschlossenen Raum enthaltende Behältnis während der Zwischenlagerzeit in einem Kühlraum von einer Temperatur im Bereich von -3°C bis +3°C angeordnet wird.

## Claims

1. A method of treating fresh meat, in particular of maturing and conserving fresh beef, pork, veal, lamb, game, poultry, fish, raw sausage and ham, in which the fresh meat is subjected to intermediate storage in a gas atmosphere different from the outside atmosphere in a space which can be closed in an air-tight manner for a pre-settable time, with an oxygen atmosphere being built up with a pressure lying above atmospheric pressure in the space which can be closed in an air-tight manner,
**characterised in that** the oxygen atmosphere in the closed space is brought to an overpressure with respect to the atmospheric pressure from 6 to 20 bar, in particular of over 11 bar; and **in that** this overpressure is maintained during the total further intermediate storage time.

2. A method in accordance with claim 1, **characterised in that** the oxygen atmosphere has a degree of purity of at least 50%, in particular of more than 80% and preferably of at least 93%.

3. A method in accordance with claim 1 or claim 2, **characterised in that** oxygen is produced outside the closed space and is stored in an oxygen tank at an overpressure, preferably with 6 bar of overpressure with respect to the atmospheric pressure; and **in that** at least the initial build up of the oxygen atmosphere in the closed space is carried out by means of the stored oxygen.

4. A method in accordance with claim 3, **characterised in that**, after the pressure balance between the oxygen tank and the closed space, the connection between the oxygen tank and the closed space is interrupted and the oxygen required for the further build up of the overpressure is delivered to the closed space directly from the oxygen source.

5. A method in accordance with claim 4, **characterised in that** the pressure balance takes place at approximately 0 to 0.6 bar.

6. A method in accordance with claim 4 or claim 5, **characterised in that** the oxygen is delivered to the closed space from the oxygen source at a pressure which is somewhat higher than the pressure to be achieved in the closed space.

7. A method in accordance with any one of claims 1 to 4, **characterised in that** a continuous or discontinuous supplementation of the oxygen atmosphere is carried out in the closed space during the intermediate storage time, with oxygen preferably being led continuously into the closed space at a pressure which is higher than a pre-settable discharge pressure such **that** a continuous throughflow occurs as a result of the pressure difference.

8. A method in accordance with any one of claims 1 to 7, **characterised in that** 2 to 5 days is selected as the intermediate storage time for pork and 5 to 9 days for beef.

9. A method in accordance with any one of claims 1 to 8, **characterised in that** the fresh meat is introduced into the closed or closable space in a well-cooled state, in particular at a temperature in the range from 1°C to 3°C, with the container including the closed space preferably being arranged in a cooling chamber of a temperature in the range from -3°C to +3°C during the intermediate storage time.

## Revendications

1. Procédé pour le traitement de viande fraîche, en particulier pour la maturation et la conservation de viande fraîche de boeuf, porc, veau, agneau, gibier, volaille, de poisson, de saucisse et saucisson crus et du jambon, dans lequel on entrepose pendant une période prédéterminée la viande fraîche dans une chambre susceptible d'être refermée de façon étanche à l'air dans une atmosphère gazeuse qui diffère de l'atmosphère extérieure, et dans lequel on établit dans la chambre susceptible d'être fermée de façon étanche à l'air une atmosphère d'oxygène à une pression supérieure à la pression atmosphérique, **caractérisé en ce que** l'on amène l'atmosphère d'oxygène dans la chambre fermée avec une surpression de 6 à 20 bar par rapport à la pression atmosphérique, en particulier de plus de 11 bar, et **en ce que** l'on maintient cette surpression pendant toute la période d'entreposage qui suit.

2. Procédé selon la revendication 1, **caractérisé en ce que** l'atmosphère d'oxygène possède un degré de pureté d'au moins 50 %, en particulier de plus de 80 % et de préférence d'au moins 93 %.

3. Procédé selon l'une ou l'autre des revendications 1 et 2, **caractérisé en ce que** l'on produit de l'oxygène à l'extérieur de la chambre fermée, et on le stocke dans un réservoir à oxygène avec une surpression, de préférence à une surpression de 6 bar par rapport à la pression atmosphérique, et **en ce que** l'on effectue de façon accélérée au moins l'établissement initial de l'atmosphère d'oxygène dans la chambre fermée au moyen de l'oxygène stocké.

4. Procédé selon la revendication 3, **caractérisé en ce qu'**après la compensation de pression entre le réservoir à oxygène et la chambre fermée, on interrompt la liaison entre le réservoir à oxygène et la chambre fermée, et on amène l'oxygène nécessaire pour la poursuite de l'établissement de la surpression dans la chambre fermée directement à partir de la source d'oxygène.

5. Procédé selon la revendication 4, **caractérisé en ce que** la compensation de pression s'effectue à environ 0 à 0,6 bar.

6. Procédé selon l'une ou l'autre des revendications 4 et 5, **caractérisé en ce que** l'on amène l'oxygène dans la chambre fermée à partir de la source d'oxygène à une pression qui est légèrement supérieure à la pression à atteindre dans la chambre fermée.

7. Procédé selon l'une des revendications 1 à 4, **caractérisé en ce que** pendant la durée d'entreposage, on complète de façon continue ou discontinue l'atmosphère d'oxygène dans la chambre fermée, et de préférence on introduit en continu de l'oxygène dans la chambre fermée à une pression qui est supérieure à une pression de sortie prédéterminée, de sorte qu'en raison de la différence de pression s'établit un écoulement traversant continu.

8. Procédé selon l'une des revendications 1 à 7, **caractérisé en ce que** l'on choisit en tant que période d'entreposage une durée de 2 à 5 jours pour la viande de porc et une durée de 5 à 9 jours pour la viande de boeuf.

9. Procédé selon l'une des revendications 1 à 8, **caractérisé en ce que** l'on introduit la viande fraîche dans un état bien refroidi, en particulier à une température dans la plage de 1°C à 3°C, dans la chambre fermée ou susceptible d'être fermée, et de préférence on agence le réceptacle contenant la chambre fermée, pendant la durée d'entreposage, dans une chambre froide d'une température dans la plage de -3°C à +3°C.
